# EUROPEAN PATENT SPECIFICATION

(11) **EP 3 373 662 B1**
(45) Date of publication and mention of the grant of the patent: **22.01.2020**
(21) Application number: 18155066.6
(22) Date of filing: 05.02.2018
(51) Int. Cl.: H04W 52/02

(54) **AUTOMATIC UPLOADING METHOD AND PORTABLE INFORMATION CAPTURING DEVICE CAPABLE OF AUTOMATIC UPLOADING**
AUTOMATISCHES HOCHLADEVERFAHREN UND TRAGBARE INFORMATIONSERFASSUNGSVORRICHTUNG ZUR ERMÖGLICHUNG DES AUTOMATISCHEN HOCHLADENS
PROCÉDÉ DE TÉLÉCHARGEMENT AUTOMATIQUE ET DISPOSITIF DE CAPTURE D'INFORMATIONS PORTABLE CAPABLE DE TÉLÉCHARGER AUTOMATIQUEMENT

(30) Priority: 10.03.2017 DE 102017105167
(43) Date of publication of application: 12.09.2018
(73) Proprietor: Getac Technology Corporation, Taipei City 11568 (TW)
(72) Inventor: HU, Chien-Chih, Taipei City 11568 (TW); WU, Chia-Chuan, Taipei City 11568 (TW); TSAI, Chen-Shu, Taipei City 11568 (TW); CHANG, Ta-Wei, Taipei City 11568 (TW)
(74) Representative: Viering, Jentschura & Partner mbB Patent- und Rechtsanwälte

(56) References cited:
- US-A1- 2011 148 349
- US-A1- 2016 381 638

## Description

### BACKGROUND OF THE INVENTION

### FIELD OF THE INVENTION

The present invention relates to portable information capturing devices and, more particularly, to an automatic uploading method and a portable information capturing device capable of automatic uploading.

### DESCRIPTION OF THE PRIOR ART

US 2016/381638 A1 discloses a low-power wake-up radio (LP-WUR) mobile platform that listens to the wireless medium for a wake-up signal. The LP-WUR allows the mobile platform to completely turn off the main wireless radios, such as Wi-Fi, Bluetooth (BT), Low-Energy Bluetooth (BLE), and the like, and then selectively or opportunistically turn them on only when there is data to transmit or receive based on a wake-up signal.
Due to enhanced security awareness among the general public, portable information capturing devices are used as security auxiliary devices and widely applied to various fields because they are convenient to carry and capable of capturing real-time data.

Conventional portable information capturing devices capture data pertaining to images, sounds, and the like and store the captured data in their memory space, such as memory cards. However, the memory space of conventional portable information capturing devices is not unlimited, and data stored therein may get lost because of the inadequacy of the memory space. As a result, after capturing data with conventional portable information capturing devices for a specific period of time, users have to manually output or transfer the data stored in the memory space, for example, remove memory cards from the conventional portable information capturing devices and then insert the memory cards into related slots of computers to transfer data.

The aforesaid manual data transfer process is intricate and takes much time, thereby being inefficient.

### SUMMARY OF THE INVENTION

In an embodiment, an automatic uploading method comprises the steps as disclosed in claim 1.

In an embodiment, a portable information capturing device capable of automatic uploading comprises the sub-units as disclosed in claim 7.

Fine features and advantages of the present invention are described below to enable persons skilled in the art to gain insight into the technical solution disclosed in the present invention and thus implement the present invention. Furthermore, persons skilled in the art can easily understand related objectives and advantages of the present invention by referring to the disclosure contained herein, the claims, and the accompanying drawings.

### BRIEF DESCRIPTION OF THE DRAWINGS

FIG. 1 is a schematic view of a transmission system according to the first embodiment of the present invention;
FIG. 2 is a block diagram of a portable information capturing device capable of automatic uploading according to the first embodiment of the present invention;
FIG. 3 is a flow chart of an automatic uploading method according to the first embodiment of the present invention;
FIG. 4 is a schematic view of the transmission system according to the second embodiment of the present invention; and
FIG. 5 is a flow chart of the automatic uploading method according to the second embodiment of the present invention.

### DETAILED DESCRIPTION OF THE EMBODIMENTS

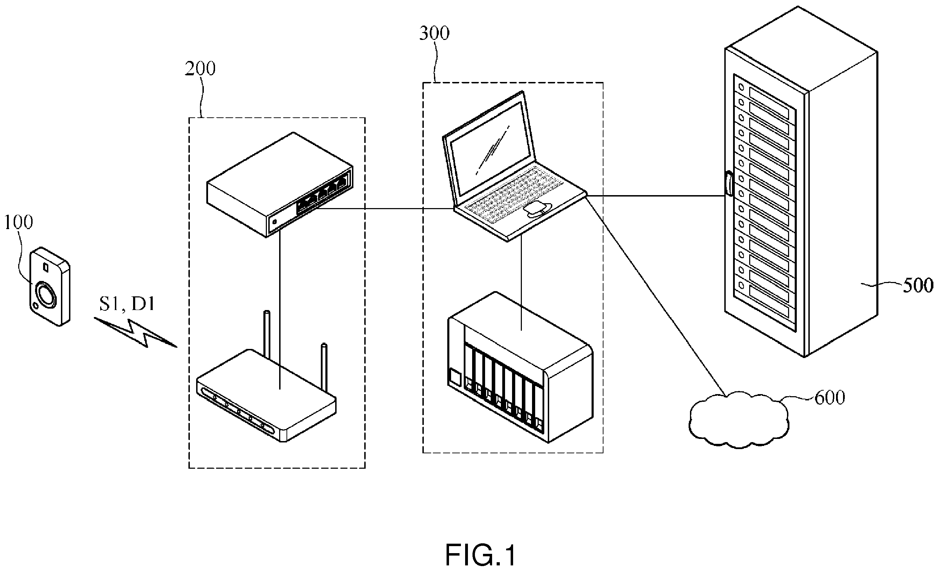

FIG. 1 is a schematic view of a transmission system according to the first embodiment of the present invention. Referring to FIG. 1, a portable information capturing device 100 capable of automatic uploading generates an upload data D1, creates automatically, according to an automatic uploading method of any embodiment of the portable information capturing device 100, a connection to a first relay station 200 which falls within the radio frequency (RF) signal coverage of the portable information capturing device 100, and transmits the upload data D1 to a second relay station 300 through the first relay station 200. Therefore, the transmission system comprises the portable information capturing device 100, the first relay station 200, and the second relay station 300. Once the connection is created, the first relay station 200 will be connected between the portable information capturing device 100 and the second relay station 300.

Although only one portable information capturing device 100 is shown in FIG. 1, its quantity is not restricted by FIG. 1. Therefore, when the first relay station 200 falls within the RF signal coverage of multiple portable information capturing devices 100, the portable information capturing devices 100 create connections to the first relay station 200 simultaneously and automatically to upload the upload data D1 to the same second relay station 300 or different second relay stations 300 through the first relay station 200.

Although only one first relay station 200 is shown in FIG. 1, its quantity is not restricted by FIG. 1. Therefore, when multiple first relay stations 200 fall within the RF signal coverage of the portable information capturing devices 100, the portable information capturing devices 100 automatically create connections to the first relay stations 200 which fall within the RF signal coverage of the portable information capturing devices 100. However, at this point in time, the portable information capturing devices 100 actually create connections to just one of the first relay stations 200.

In some embodiments, the portable information capturing devices 100 are multimedia capturing devices, such as body-worn cameras, walkmans, recorder pens, and event data recorders. The first relay station 200 comprises one or more network devices. The network devices are each an RF access point (AP), such as an RF router, a switch, or a combination thereof. The second relay station 300 comprises one or more hosts. Each host is a computer, server, gateway, or network attached storage (NAS). Furthermore, a connection between the first relay station 200 and the second relay station 300 is created by RF communication, cable communication, or a combination thereof, but the present invention is not limited thereto.

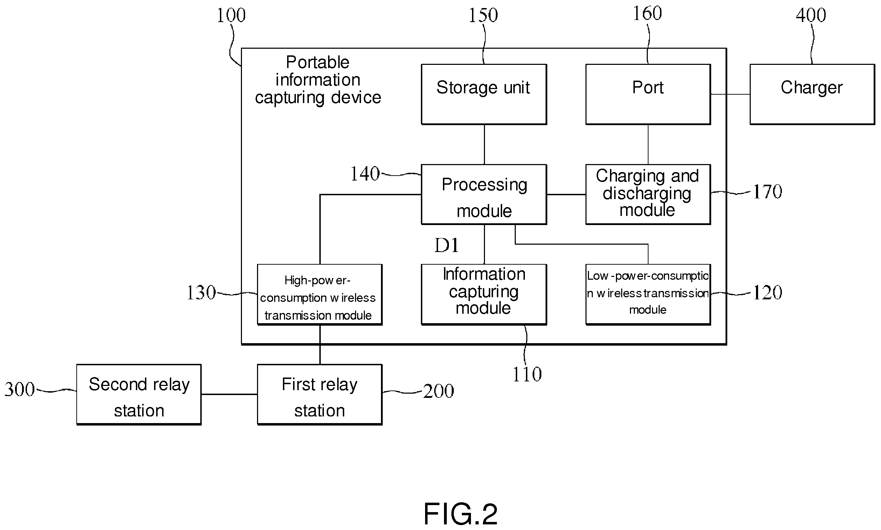

FIG. 2 is a block diagram of a portable information capturing device capable of automatic uploading according to the first embodiment of the present invention. Referring to FIG. 1 and FIG. 2, the portable information capturing devices 100 comprises an information capturing module 110, a low-power-consumption wireless transmission module 120, a high-power-consumption wireless transmission module 130, and a processing module 140. The processing module 140 is coupled to the information capturing module 110, the low-power-consumption wireless transmission module 120, and the high-power-consumption wireless transmission module 130.

In some embodiments, the processing module 140 comes in the form of one or more processing components. The processing components are each an SoC (System on a Chip), a CPU (central processing unit), or an MCU (microcontroller), but the present invention is not limited thereto.

The information capturing module 110 generates the upload data D1. In some embodiments, the information capturing module 110 captures information pertaining to the surroundings of the portable information capturing devices 100 in order to generate the upload data D1 corresponding to the captured information. In some embodiments, the upload data D1 is multimedia data descriptive of images and/or sounds. Furthermore, the information capturing module 110 is audiovisual input equipment, such as a camera lens and/or a microphone, but the present invention is not limited thereto.

In an embodiment, the portable information capturing devices 100 further comprises a storage unit 150. The storage unit 150 is coupled to the processing module 140. The storage unit 150 stores the upload data D1 generated by the information capturing module 110.

In some embodiments, the storage unit 150 is provided in the form of one or more storage components. The storage components are non-volatile memory (such as ROM and flash memory) or volatile memory (such as RAM).

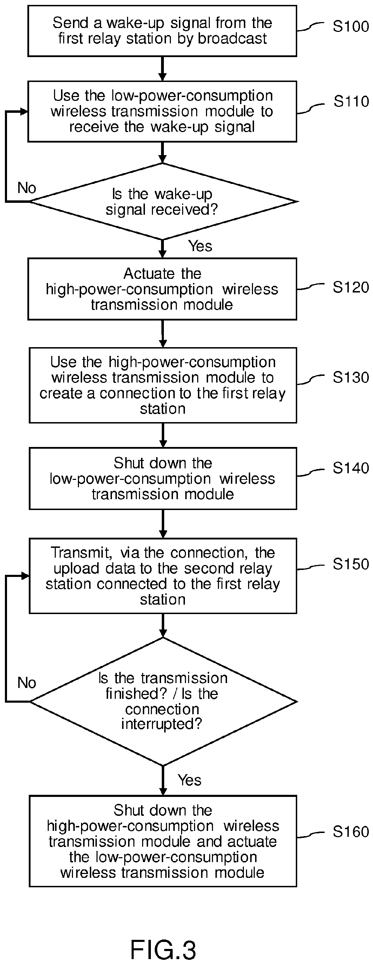

FIG. 3 is a flow chart of an automatic uploading method according to the first embodiment of the present invention. Referring to FIG. 1 through FIG. 3, in this embodiment, normally, no communication connection is created between the first relay station 200 and the portable information capturing devices 100. Furthermore, the first relay station 200 sends a wake-up signal S1 by broadcast (step S100). The wake-up signal S1 actuates the high-power-consumption wireless transmission module 130 which is otherwise in a shutdown state so that the portable information capturing devices 100 uploads the upload data D1 through the high-power-consumption wireless transmission module 130. If the RF signal coverage of the low-power-consumption wireless transmission module 120 and the broadcast range of the first relay station 200 (i.e., the portable information capturing devices 100 fall within the broadcast range of the first relay station 200) overlap, the portable information capturing devices 100 will use the low-power-consumption wireless transmission module 120 to receive the wake-up signal S1 (step S110) and thereby allow the high-power-consumption wireless transmission module 130 to create a communication connection to the first relay station 200. The wake-up signal S1 is an RF signal. Normally, the low-power-consumption wireless transmission module 120 of the portable information capturing devices 100 is in an enabled state and scans (detects) repeatedly for RF signals within the RF signal coverage of the low-power-consumption wireless transmission module 120.

After the low-power-consumption wireless transmission module 120 has received the wake-up signal S1, the processing module 140 actuates the high-power-consumption wireless transmission module 130 according to the wake-up signal S1 (step S120). After the high-power-consumption wireless transmission module 130 has started, the portable information capturing device 100 uses the high-power-consumption wireless transmission module 130 to create a connection to the first relay station 200 (step S130). After the connection has been created, the processing module 140 shuts down the low-power-consumption wireless transmission module 110 (step S140) and then transmits, via the connection, the upload data D1 to the second relay station 300 connected to the first relay station 200 (step S150). Therefore, with the high-power-consumption wireless transmission module 130, it is feasible for the processing module 140 to upload the upload data D1 to the second relay station 300 through the first relay station 200.

In an embodiment of step S110, the portable information capturing device 100 performs detection continuously through the low-power-consumption wireless transmission module 120, so as to receive the wake-up signal S1, thereby allowing the processing module 140 to actuate the high-power-consumption wireless transmission module 130 to begin operating. However, the present invention is not limited thereto, as, in another embodiment of step S110, the portable information capturing devices 100 performs detection discontinuously through the low-power-consumption wireless transmission module 120 (by alternating between a detection session and a pause session until the wake-up signal S1 is received), thereby allowing the processing module 140 to actuate the high-power-consumption wireless transmission module 130 to begin operating.

In some embodiments, the low-power-consumption wireless transmission module 120 is configured for Bluetooth, such as Classic Bluetooth, Bluetooth High Speed, and Bluetooth Low Energy (BLE), to effectuate Bluetooth-enabled data transmission. Furthermore, the high-power-consumption wireless transmission module 130 is a Wi-Fi-enabled transmission module, but the present invention is not limited thereto.

Although in this embodiment the low-power-consumption wireless transmission module 120 receives the wake-up signal S1, the present invention is not limited to this function, because the low-power-consumption wireless transmission module 120 operates in a way as needed. The portable information capturing devices 100 use the low-power-consumption wireless transmission module 120 to perform wireless transmission of data with the other devices.

In an embodiment of step S130, the high-power-consumption wireless transmission module 130 creates a security connection to the first relay station 200 by a security protection mechanism, such as RSA encryption algorithm.

In an embodiment of step S140, after confirming that it has created a connection to the first relay station 200, the portable information capturing device 100 disables the operation of the low-power-consumption wireless transmission module120 to reduce power consumption and prevent the low-power-consumption wireless transmission module 120 from receiving the wake-up signal S1 from another first relay station again.

In an embodiment of step S150, the wake-up signal S1 includes a service identifier (such as Service Set Identifier, SSID) of the second relay station 300 connected to the first relay station 200, and the high-power-consumption wireless transmission module 130 creates a connection to the second relay station 300 according to the service identifier attributed to the second relay station 300 and described in the wake-up signal S1, so as for the portable information capturing device 100 to transmit the upload data D1 to the second relay station 300.

In an embodiment, after step S150, the processing module 140 of the portable information capturing device 100 further detects whether the high-power-consumption wireless transmission module 130 has transmitted to the second relay station 300 the upload data D1 otherwise stored in the storage unit 150. After determining that the upload data D1 has been transmitted, the processing module 140 shuts down the high-power-consumption wireless transmission module 130 and actuates the low-power-consumption wireless transmission module 120 (step S160), so as to prevent the high-power-consumption wireless transmission module 130 from operating too long and thus reduce the overall power consumption of the portable information capturing device 100. However, the present invention is not limited thereto, as, in another embodiment, after step S150, the processing module 140 of the portable information capturing device 100 determines whether to execute step S160, according to whether the connection has been interrupted. For example, if a user moves and thereby distances himself or herself from the first relay station 200, the portable information capturing device 100 may have the connection interrupted in order for step S160 to be executed, allowing the portable information capturing device 100 to use the low-power-consumption wireless transmission module 120 to detect for the wake-up signal S1 anew.

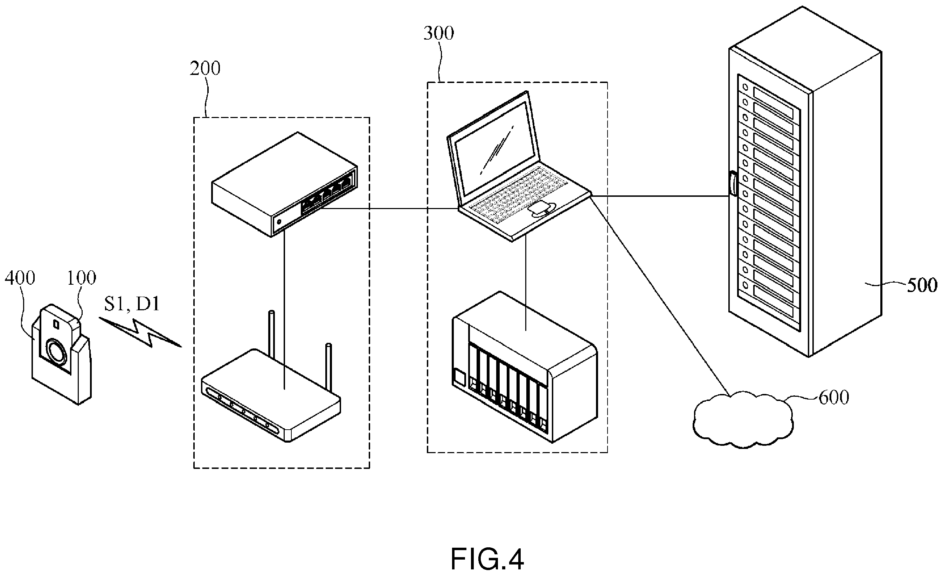

FIG. 4 is a schematic view of the transmission system according to the second embodiment of the present invention. Referring to FIG. 2 and FIG. 4, in an embodiment, the portable information capturing device 100 further comprises a port 160 and a charging and discharging module 170. The charging and discharging module 170 is coupled to the port 160 and the processing module 140. The port 160 is adapted to connect with a charger 400 so that a charging process can be performed with the charger 400. Furthermore, the charging and discharging module 170 stores the power received through the port 160, and the stored power is eventually supplied to the portable information capturing device 100 for performing related operations.

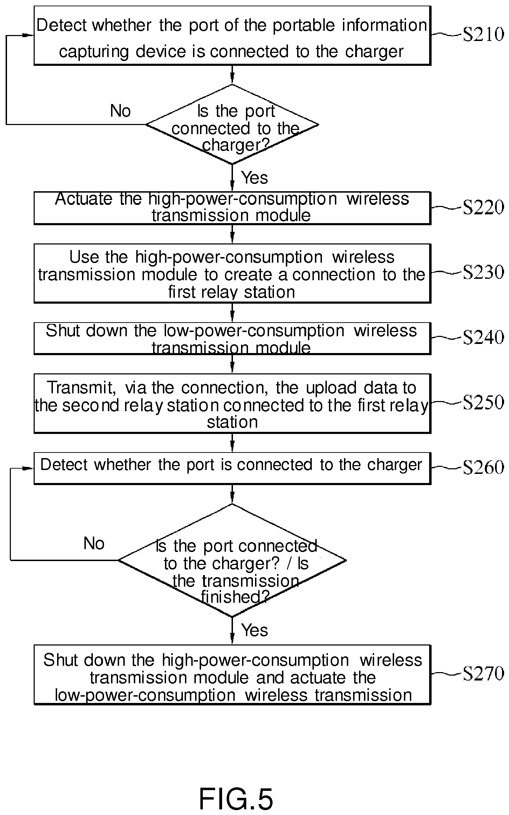

FIG. 5 is a flow chart of the automatic uploading method according to the second embodiment of the present invention. Referring to FIG. 1 through FIG. 5, in the second embodiment of the automatic uploading method, before detecting whether the port 160 is connected to the charger 400 (step S210) and determining that the port 160 is connected to the charger 400, the processing module 140 actuates the high-power-consumption wireless transmission module 130 (step S220) before the low-power-consumption wireless transmission module 120 receives the wake-up signal S1. After the high-power-consumption wireless transmission module 130 has started, the portable information capturing device 100 uses the high-power-consumption wireless transmission module 130 to create a connection to the first relay station 200 (step S230). After the connection between the high-power-consumption wireless transmission module 130 and the first relay station 200 has been created, the processing module 140 shuts down the low-power-consumption wireless transmission module 120 (step S240) and transmits, via the connection, the upload data D1 to the second relay station 300 connected to the first relay station 200 (step S250), thereby effectuating the transmission of the upload data D1 automatically.

In an embodiment of step S210, the processing module 140 determines whether the port 160 has separated from the charger 400, according to whether the charging and discharging module 170 performs a charging process through the port 160.

Step S220, step S230, and step S240 are substantially the same as step S120, step 130, and step S140, respectively, and thus are not described herein for the sake of brevity.

In an embodiment of step S250, the high-power-consumption wireless transmission module 130 creates a connection to the first relay station 200 to obtain the service identifier of the second relay station 300, and then the high-power-consumption wireless transmission module 130 creates a connection to the second relay station 300 according to the obtained service identifier, thereby allowing the second relay station 300 to take the upload data D1 of the portable information capturing device 100 to its access space via the connection.

In an embodiment, after step S250, the processing module 140 of the portable information capturing device 100 detects whether the port 160 has been connected to the charger 400 (step S260). If the processing module 140 does not detect that the port 160 has been connected to the charger 400, the processing module 140 actuates the low-power-consumption wireless transmission module 120 again and shuts down the high-power-consumption wireless transmission module 130 (step S270), so as to prevent the high-power-consumption wireless transmission module 130 from operating too long and thus reduce the overall power consumption of the portable information capturing device 100. However, the present invention is not limited thereto, as, in another embodiment, after step S250, the processing module 140 of the portable information capturing device 100 determines whether to execute step S270, according to whether the upload data D1 stored in the storage unit 150 has been transmitted to the second relay station 300. For example, after determining that the transmission of the upload data D1 has been finished, the processing module 140 of the portable information capturing device 100 executes step S270 to actuate the low-power-consumption wireless transmission module 120 again and shut down the high-power-consumption wireless transmission module 130.

In some embodiments, the second relay station 300 transfers collected multiple upload data D1 to a server 500 or cloud 600 dedicated to data storage, through an RF network and/or a cable network, regularly to effectuate an update.

In conclusion, in embodiments of the present invention, an automatic uploading method and a portable information capturing device capable of automatic uploading are characterized in that a high-power-consumption wireless transmission module is actuated to create a connection, according to whether a low-power-consumption wireless transmission module has detected a wake-up signal sent from a first relay station or according to whether the portable information capturing device has been connected to a charger, so that the portable information capturing device effectuates transmission of upload data automatically via a connection created by the high-power-consumption wireless transmission module, thereby dispensing users with the need to carry out complicated operation procedure manually. Furthermore, since the automatic uploading method and the portable information capturing device capable of automatic uploading effectuate transmission of upload data automatically, the users need not wait for the transmission of upload data, thereby enhancing transfer efficiency. Moreover, since the high-power-consumption wireless transmission module is usually in a shutdown state and will be actuated only if transmission of upload data is required, thereby reducing overall power consumption.

## Claims

1. An automatic uploading method, comprising the steps of:
sending a wake-up signal (S1) from a first relay station (200) by broadcast;
receiving the wake-up signal (S1) by a low-power-consumption wireless transmission module (120) of a portable information capturing device (100);
actuating a high-power-consumption wireless transmission module (130) of the portable information capturing device (100) according to the wake-up signal (S1);
creating a connection between the high-power-consumption wireless transmission module (130) and the first relay station (200) after the high-power-consumption wireless transmission module (130) has been actuated;
shutting down the low-power-consumption wireless transmission module (120) after the connection has been created; and
transmitting, via the connection, an upload data (D1) of the portable information capturing device (100) to a second relay station (300), wherein the second relay station (300) is connected to the first relay station (200);
wherein the wake-up signal (S1) includes a service identifier of the second relay station (300), and the high-power-consumption wireless transmission module (130) creates the connection to the second relay station (300) according to the service identifier, so as for the upload data (D1) to be transmitted to the second relay station (300).

2. The automatic uploading method of claim 1, further comprising, after the step of transmitting the upload data (D1) of the portable information capturing device (100), shutting down the high-power-consumption wireless transmission module (130) and actuating the low-power-consumption wireless transmission module (120).

3. The automatic uploading method of any one of claims 1 to 2, wherein, before the step of receiving the wake-up signal (S1) by a low-power-consumption wireless transmission module (120) of a portable information capturing device (100), the automatic uploading method further comprises:
detecting whether a port of the portable information capturing device (100) is connected to a charger (400); and
actuating the high-power-consumption wireless transmission module (130) when it is detected that the port is connected to the charger (400).

4. The automatic uploading method of claim 3, wherein, after the step of actuating the high-power-consumption wireless transmission module (130) when it is detected that the port is connected to the charger (400), the automatic uploading method further comprises:
detecting whether the port is connected to the charger (400); and
actuating the low-power-consumption wireless transmission module (120) and shutting down the high-power-consumption wireless transmission module (130), when it is not detected that the port is connected to the charger (400).

5. The automatic uploading method of any one of claims 1 to 4, wherein the low-power-consumption wireless transmission module (120) is a Bluetooth-enabled transmission module, and the high-power-consumption wireless transmission module (130) is a Wi-Fi-enabled transmission module.

6. The automatic uploading method of any one of claims 1 to 5, wherein the high-power-consumption wireless transmission module (130) creates a connection to the first relay station (200) by a security protection mechanism.

7. A portable information capturing device (100) capable of automatic uploading, comprising:
an information capturing module (110) for generating an upload data (D1);
a low-power-consumption wireless transmission module (120) adaptedt to receive a wake-up signal (S1) sent from a first relay station (200) by broadcast;
a high-power-consumption wireless transmission module (130) configured for creating a connection to the first relay station (200); and
a processing module (140) configured for actuating the high-power-consumption wireless transmission module (130) as soon as the low-power-consumption wireless transmission module (120) receives the wake-up signal (S1), and shutting down the low-power-consumption wireless transmission module (120) as soon as the connection is created, so as for the upload data (D1) to be transmitted to a second relay station (300) via the connection, wherein the second relay station (300) is connected to the first relay station (200);
wherein the wake-up signal (S1) comprises a service identifier of the second relay station (300), and the high-power-consumption wireless transmission module (130) creates the connection to the second relay station (300) according to the service identifier to transmit the upload data (D1) to the second relay station (300).

8. The portable information capturing device (100) capable of automatic uploading according to claim 7, wherein, upon completion of transmission of the upload data (D1), the processing module is configured to shut down the high-power-consumption wireless transmission module (130) and actuates the low-power-consumption wireless transmission module (120).

9. The portable information capturing device (100) capable of automatic uploading according to any one of claims 7 to 8, further comprising:
a port connected to a charger (400), wherein, when the port is connected to the charger (400), the processing module (140) is configured to actuate the high-power-consumption wireless transmission module (130)

10. The portable information capturing device (100) capable of automatic uploading according to claim 9, wherein, upon connection of the port and the charger (400) and actuation of the high-power-consumption wireless transmission module (130), the processing module (140) is configured to actuate the low-power-consumption wireless transmission module (120) and to shut down the high-power-consumption wireless transmission module (130) as soon as the port separates from the charger.

11. The portable information capturing device (100) capable of automatic uploading according to any one of claims 7 to 10, wherein the low-power-consumption wireless transmission module (120) is a Bluetooth-enabled transmission module, and the high-power-consumption wireless transmission module (130) is a Wi-Fi-enabled transmission module.

12. The portable information capturing device (100) capable of automatic uploading according to any one of claims 7 to 11, wherein the high-power-consumption wireless transmission module (130) is adapted to create the connection to the first relay station (200) by a security protection mechanism.

## Patentansprüche

1. Automatisches Hochladeverfahren, umfassend die folgenden Schritte:
Senden eines Wecksignals (S1) von einer ersten Relaisstation (200) durch Rundsenden,
Empfangen des Wecksignals (S1) durch ein geringer-Stromverbrauch-Drahtlos-Sendemodul (120) einer tragbaren Informationserfassungsvorrichtung (100),
Betätigen eines hoher-Stromverbrauch-Drahtlos-Sendemoduls (130) der tragbaren Informationserfassungsvorrichtung (100) gemäß dem Wecksignal (S1),
Herstellen einer Verbindung zwischen dem hoher-Stromverbrauch-Drahtlos-Sendemodul (130) und der ersten Relaisstation (200), nachdem das hoher-Stromverbrauch-Drahtlos-Sendemodul (130) betätigt wurde,
Abschalten des geringer-Stromverbrauch-Drahtlos-Sendemoduls (120), nachdem die Verbindung hergestellt wurde, und
Senden von Hochladedaten (D1) der tragbaren Informationserfassungsvorrichtung (100) über die Verbindung an eine zweite Relaisstation (300), wobei die zweite Relaisstation (300) mit der ersten Relaisstation (200) verbunden ist,
wobei das Wecksignal (S1) eine Dienstkennung der zweiten Relaisstation (300) aufweist und das hoher-Stromverbrauch-Drahtlos-Sendemodul (130) die Verbindung mit der zweiten Relaisstation (300) gemäß der Dienstkennung herstellt, damit die Hochladedaten (D1) an die zweite Relaisstation (300) gesendet werden.

2. Automatisches Hochladeverfahren nach Anspruch 1, ferner umfassend, nach dem Schritt des Sendens der Hochladedaten (D1) der tragbaren Informationserfassungsvorrichtung (100), das Abschalten des hoher-Stromverbrauch-Drahtlos-Sendemoduls (130) und das Betätigen des geringer-Stromverbrauch-Drahtlos-Sendemoduls (120).

3. Automatisches Hochladeverfahren nach einem der Ansprüche 1 bis 2, wobei vor dem Schritt des Empfangens des Wecksignals (S1) durch ein geringer-Stromverbrauch-Drahtlos-Sendemodul (120) einer tragbaren Informationserfassungsvorrichtung (100) das automatische Hochladeverfahren ferner umfasst:
Detektieren, ob ein Anschluss der tragbaren Informationserfassungsvorrichtung (100) mit einem Ladegerät (400) verbunden ist, und
Betätigen des hoher-Stromverbrauch-Drahtlos-Sendemoduls (130), wenn detektiert wird, dass der Anschluss mit dem Ladegerät (400) verbunden ist.

4. Automatisches Hochladeverfahren nach Anspruch 3, wobei, nach dem Schritt des Betätigens des hoher-Stromverbrauch-Drahtlos-Sendemoduls (130), wenn festgestellt wird, dass der Anschluss mit dem Ladegerät (400) verbunden ist, das automatische Hochladeverfahren ferner umfasst:
Detektieren, ob der Anschluss mit dem Ladegerät (400) verbunden ist, und
Betätigen des geringer-Stromverbrauch-Drahtlos-Sendemoduls (120) und Abschalten des hoher-Stromverbrauch-Drahtlos-Sendemoduls (130), wenn nicht detektiert wird, dass der Anschluss mit dem Ladegerät (400) verbunden ist.

5. Automatisches Hochladeverfahren nach einem der Ansprüche 1 bis 4, wobei das geringer-Stromverbrauch-Drahtlos-Sendemodul (120) ein Bluetooth-fähiges Sendemodul ist und das hoher-Stromverbrauch-Drahtlos-Sendemodul (130) ein Wi-Fi-fähiges Sendemodul ist.

6. Automatisches Hochladeverfahren nach einem der Ansprüche 1 bis 5, wobei das hoher-Stromverbrauch-Drahtlos-Sendemodul (130) eine Verbindung mit der ersten Relaisstation (200) durch einen Sicherheitsschutzmechanismus herstellt.

7. Tragbare Informationserfassungsvorrichtung (100), die zum automatischen Hochladen geeignet ist, umfassend:
ein Informationserfassungsmodul (110) zum Erzeugen von Hochladedaten (D1),
ein geringer-Stromverbrauch-Drahtlos-Sendemodul (120), das angepasst ist, um ein Wecksignal (S1) zu empfangen, das durch Rundsenden von einer ersten Relaisstation (200) gesendet wird,
ein hoher-Stromverbrauch-Drahtlos-Sendemodul (130), das zum Herstellen einer Verbindung mit der ersten Relaisstation (200) konfiguriert ist, und
ein Verarbeitungsmodul (140), das zum Betätigen des hoher-Stromverbrauch-Drahtlos-Sendemoduls (130), sobald das geringer-Stromverbrauch-Drahtlos-Sendemodul (120) das Wecksignal (S1) empfängt, und zum Abschalten des geringer-Stromverbrauch-Drahtlos-Sendemoduls (120), sobald die Verbindung hergestellt ist, konfiguriert ist, so dass die Hochladedaten (D1) über die Verbindung an eine zweite Relaisstation (300) gesendet werden, wobei die zweite Relaisstation (300) mit der ersten Relaisstation (200) verbunden ist,
wobei das Wecksignal (S1) eine Dienstkennung der zweiten Relaisstation (300) umfasst, und das hoher-Stromverbrauch-Drahtlos-Sendemodul (130) die Verbindung mit der zweiten Relaisstation (300) gemäß der Dienstkennung herstellt, um die Hochladedaten (D1) an die zweite Relaisstation (300) zu senden.

8. Tragbare Informationserfassungsvorrichtung (100), die zum automatischen Hochladen geeignet ist, nach Anspruch 7, wobei das Verarbeitungsmodul nach Abschluss des Sendens der Hochladedaten (D1) konfiguriert ist, um das hoher-Stromverbrauch-Drahtlos-Sendemodul (130) abzuschalten, und das geringer-Stromverbrauch-Drahtlos-Sendemodul (120) betätigt.

9. Tragbare Informationserfassungsvorrichtung (100), die zum automatischen Hochladen geeignet ist, nach einem der Ansprüche 7 bis 8, ferner umfassend:
einen Anschluss, der mit einem Ladegerät (400) verbunden ist, wobei, wenn der Anschluss mit dem Ladegerät (400) verbunden ist, das Verarbeitungsmodul (140) konfiguriert ist, um das hoher-Stromverbrauch-Drahtlos-Sendemodul (130) zu betätigen.

10. Tragbare Informationserfassungsvorrichtung (100), die zum automatischen Hochladen geeignet ist, nach Anspruch 9, wobei das Verarbeitungsmodul (140) nach dem Verbinden des Anschlusses und des Ladegeräts (400) und dem Betätigen des hoher-Stromverbrauch-Drahtlos-Sendemoduls (130) konfiguriert ist, um das geringer-Stromverbrauch-Drahtlos-Sendemodul (120) zu betätigen und das hoher-Stromverbrauch-Drahtlos-Sendemodul (130) abzuschalten, sobald sich der Anschluss vom Ladegerät trennt.

11. Tragbare Informationserfassungsvorrichtung (100), die zum automatischen Hochladen geeignet ist, nach einem der Ansprüche 7 bis 10, wobei das geringer-Stromverbrauch-Drahtlos-Sendemodul (120) ein Bluetooth-fähiges Sendemodul ist und das hoher-Stromverbrauch-Drahtlos-Sendemodul (130) ein Wi-Fi-fähiges Sendemodul ist.

12. Tragbare Informationserfassungsvorrichtung (100), die zum automatischen Hochladen geeignet ist, nach einem der Ansprüche 7 bis 11, wobei das hoher-Stromverbrauch-Drahtlos-Sendemodul (130) angepasst ist, um die Verbindung mit der ersten Relaisstation (200) durch einen Sicherheitsschutzmechanismus herzustellen.

## Revendications

1. Procédé de téléchargement automatique, comprenant les étapes ci-dessous consistant à :
envoyer un signal de réveil (S1), à partir d'une première station relais (200), par diffusion ;
recevoir le signal de réveil (S1) par le biais d'un module de transmission sans fil à basse consommation d'énergie (120) d'un dispositif de capture d'informations portatif (100) ;
actionner un module de transmission sans fil à haute consommation d'énergie (130) du dispositif de capture d'informations portatif (100) selon le signal de réveil (S1) ;
créer une connexion entre le module de transmission sans fil à haute consommation d'énergie (130) et la première station relais (200) après l'actionnement du module de transmission sans fil à haute consommation d'énergie (130) ;
arrêter le module de transmission sans fil à basse consommation d'énergie (120) après la création de la connexion ; et
transmettre, par l'intermédiaire de la connexion, des données de téléchargement (D1) du dispositif de capture d'informations portatif (100) à une seconde station relais (300), dans lequel la seconde station relais (300) est connectée à la première station relais (200) ;
dans lequel le signal de réveil (S1) inclut un identificateur de service de la seconde station relais (300), et le module de transmission sans fil à haute consommation d'énergie (130) crée la connexion à la seconde station relais (300) selon l'identificateur de service, afin que les données de téléchargement (D1) puissent être transmises à la seconde station relais (300).

2. Procédé de téléchargement automatique selon la revendication 1, comprenant en outre, après l'étape de transmission des données de téléchargement (D1) du dispositif de capture d'informations portatif (100), l'étape consistant à arrêter le module de transmission sans fil à haute consommation d'énergie (130) et à actionner le module de transmission sans fil à basse consommation d'énergie (120).

3. Procédé de téléchargement automatique selon l'une quelconque des revendications 1 à 2, dans lequel, avant l'étape de réception du signal de réveil (S1) par un module de transmission sans fil à basse consommation d'énergie (120) d'un dispositif de capture d'informations portatif (100), le procédé de téléchargement automatique comprend en outre les étapes ci-dessous consistant à :
détecter si un port du dispositif de capture d'informations portatif (100) est connecté à un chargeur (400) ; et
actionner le module de transmission sans fil à haute consommation d'énergie (130) lorsqu'il est détecté que le port est connecté au chargeur (400).

4. Procédé de téléchargement automatique selon la revendication 3, dans lequel, après l'étape d'actionnement du module de transmission sans fil à haute consommation d'énergie (130) lorsqu'il est détecté que le port est connecté au chargeur (400), le procédé de téléchargement automatique comprend en outre l'étape ci-dessous consistant à :
détecter si le port est connecté au chargeur (400) ; et
actionner le module de transmission sans fil à basse consommation d'énergie (120) et arrêter le module de transmission sans fil à haute consommation d'énergie (130), lorsqu'il n'est pas détecté que le port est connecté au chargeur (400).

5. Procédé de téléchargement automatique selon l'une quelconque des revendications 1 à 4, dans lequel le module de transmission sans fil à basse consommation d'énergie (120) est un module de transmission compatible Bluetooth, et le module de transmission sans fil à haute consommation d'énergie (130) est un module de transmission compatible Wi-Fi.

6. Procédé de téléchargement automatique selon l'une quelconque des revendications 1 à 5, dans lequel le module de transmission sans fil à haute consommation d'énergie (130) crée une connexion avec la première station relais (200) par le biais d'un mécanisme de protection de sécurité.

7. Dispositif de capture d'informations portatif (100) apte à un téléchargement automatique, comprenant :
un module de capture d'informations (110) destiné à générer des données de téléchargement (D1) ;
un module de transmission sans fil à basse consommation d'énergie (120) apte à recevoir un signal de réveil (S1) envoyé à partir d'une première station relais (200), par diffusion ;
un module de transmission sans fil à haute consommation d'énergie (130) configuré de manière à créer une connexion à la première station relais (200) ; et
un module de traitement (140) configuré de manière à actionner le module de transmission sans fil à haute consommation d'énergie (130) dès lors que le module de transmission sans fil à basse consommation d'énergie (120) reçoit le signal de réveil (S1), et à arrêter le module de transmission sans fil à basse consommation d'énergie (120) dès lors que la connexion est créée, afin que les données de téléchargement (D1) puissent être transmises à une seconde station relais (300) par l'intermédiaire de la connexion, dans lequel la seconde station relais (300) est connectée à la première station relais (200) ;
dans lequel le signal de réveil (S1) comprend un identificateur de service de la seconde station relais (300), et le module de transmission sans fil à haute consommation d'énergie (130) crée la connexion à la seconde station relais (300) selon l'identificateur de service en vue de transmettre les données de téléchargement (D1) à la seconde station relais (300).

8. Dispositif de capture d'informations portatif (100) apte à un téléchargement automatique selon la revendication 7, dans lequel, à l'issue de la transmission des données de téléchargement (D1), le module de traitement est configuré de manière à arrêter le module de transmission sans fil à haute consommation d'énergie (130) et à actionner le module de transmission sans fil à basse consommation d'énergie (120).

9. Dispositif de capture d'informations portatif (100) apte à un téléchargement automatique selon l'une quelconque des revendications 7 à 8, comprenant en outre :
un port connecté à un chargeur (400), dans lequel, lorsque le port est connecté au chargeur (400), le module de traitement (140) est configuré de manière à actionner le module de transmission sans fil à haute consommation d'énergie (130).

10. Dispositif de capture d'informations portatif (100) apte à un téléchargement automatique selon la revendication 9, dans lequel, suite à la connexion du port et du chargeur (400) et à l'actionnement du module de transmission sans fil à haute consommation d'énergie (130), le module de traitement (140) est configuré de manière à activer le module de transmission sans fil à basse consommation d'énergie (120) et à arrêter le module de transmission sans fil à haute consommation d'énergie (130) dès lors que le port est déconnecté du chargeur.

11. Dispositif de capture d'informations portatif (100) apte à un téléchargement automatique selon l'une quelconque des revendications 7 à 10, dans lequel le module de transmission sans fil à basse consommation d'énergie (120) est un module de transmission compatible Bluetooth, et le module de transmission sans fil à haute consommation d'énergie (130) est un module de transmission compatible Wi-Fi.

12. Dispositif de capture d'informations portatif (100) apte à un téléchargement automatique selon l'une quelconque des revendications 7 à 11, dans lequel le module de transmission sans fil à haute consommation d'énergie (130) est apte à créer la connexion à la première station relais (200), par le biais d'un mécanisme de protection de sécurité.
